# EUROPEAN PATENT APPLICATION

(11) **EP 4 375 126 A1**
(43) Date of publication of application: **29.05.2024**
(21) Application number: 22845174.6
(22) Date of filing: 11.07.2022
(51) Int. Cl.: B60L 53/62, B60L 53/31

(54) **CHARGING/DISCHARGING CONTROL METHOD, CHARGING DEVICE, AND STORAGE MEDIUM**

(30) Priority: 23.07.2021 CN 202110839708
(71) Applicant: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/104904
(87) International publication number: WO 2023/001009

(57) **Abstract**

The present disclosure relates to the technical field of charging devices of electric vehicles, provides a charge and discharge control method, a charging device and a storage medium, the method including: obtaining a residual voltage of an output terminal after a charging circuit is disconnected; controlling a discharge load connected in parallel with the output terminal to form a discharge circuit; performing frequency adjustment and/or width adjustment and/or dead zone adjustment on the residual voltage, so as to accelerate a discharge speed of the discharge circuit. Through the present disclosure, a residual voltage on a charging device side can be released quickly and safely after a charging circuit is disconnected.

## Description

The present disclosure claims priority to Chinese patent application No. 202110839708.6 and the invention title being "CHARGE AND DISCHARGE CONTROL METHOD, CHARGING DEVICE AND STORAGE MEDIUM", which was filed on July 23, 2021, which is hereby incorporated by reference in its entireties.

### TECHNICAL FIELD

The present disclosure relates to the technical field of charging devices of electric vehicles, in particular to a charge and discharge control method, a charging device and a storage medium.

### BACKGROUND

In order to meet the general demand of users on fast charging of electric vehicles as much as possible to save the charging time cost, a charging power of a charging device is generally large. Under such circumstance, because the charging device usually contains a capacitive element, after a charging circuit of the charging device is disconnected, a charging voltage on the charging device side cannot be released immediately, that is, the charging device side is prone to produce a residual voltage, which may cause harm to both individuals and the charging device. Therefore, how to release the residual voltage on the charging device side quickly and safely after the charging circuit is disconnected has currently become an urgent technical problem to be solved.

### SUMMARY OF INVENTION

A purpose of the embodiments of the present disclosure is to provide a charge and discharge control method, apparatus, device and a storage medium, so as to release a residual voltage on a charging device side quickly and safely after a charging circuit is disconnected.

In order to reach said purpose, in one aspect, the embodiments of the present Specification provide a charge and discharge control method, comprising:
obtaining a residual voltage of an output terminal after a charging circuit is disconnected;
controlling a discharge load connected in parallel with the output terminal to form a discharging circuit;
performing frequency adjustment and/or width adjustment and/or dead zone adjustment on the residual voltage, so as to accelerate a discharge speed of the discharging circuit.

In a preferred embodiment of the present Specification, obtaining a residual voltage of an output terminal comprises:
obtaining voltage sampling values of the output terminal for multiple consecutive cycles, to form a voltage sampling value sequence;
calculating an average value of middle portions of the voltage sampling value sequence, and taking the average value as a residual voltage of the output terminal.

In a preferred embodiment of the present Specification, performing frequency adjustment and/or width adjustment and/or dead zone adjustment on the residual voltage comprises:
adjusting a pulse frequency of the residual voltage upward;
if the residual voltage still does not drop to a specified voltage value when the pulse frequency is adjusted to an upper frequency limit, adjusting a pulse width of the residual voltage downward;
if the residual voltage still does not drop to the specified voltage value when the pulse width is adjusted to a lower width limit, adjusting a dead zone time of the residual voltage downward.

In a preferred embodiment of the present Specification, adjusting a pulse frequency of the residual voltage upward comprises:
adjusting a pulse frequency of the residual voltage upward by using a proportional adjustment mode within a specified frequency adjustment range.

In a preferred embodiment of the present Specification, adjusting a pulse width of the residual voltage downward comprises:
adjusting a pulse width of the residual voltage downward using a proportional adjustment mode within a first width adjustment range according to a current pulse width and a voltage error value of the residual voltage; the voltage error value is a difference between a current voltage value of the residual voltage and the specified voltage value.

In a preferred embodiment of the present Specification, adjusting a dead zone time of the residual voltage downward comprises:
adjusting a pulse width of the residual voltage downward using a proportional adjustment mode within a second width adjustment range according to a current pulse width and a voltage error value of the residual voltage, to regulate a dead zone time of the residual voltage; the voltage error value is a difference between a current voltage value of the residual voltage and the specified voltage value.

In a preferred embodiment of the present Specification, performing frequency adjustment and/or width adjustment and/or dead zone adjustment on the residual voltage further comprises:
disconnecting the discharging circuit when a current value of the discharging circuit exceeds a current threshold.

In a preferred embodiment of the present Specification, controlling a discharge load connected in parallel with the output terminal to form a discharging circuit comprises:
determining whether a residual voltage of the output terminal reaches a voltage threshold;
controlling a discharge load connected in parallel with the output terminal to form a discharging circuit when the residual voltage of the output terminal reaches the voltage threshold.

In a preferred embodiment of the present Specification, a resistance value of the discharge load is less than an equivalent resistance value of a main circuit of a charging device.

In a preferred embodiment of the present Specification, the method further comprises:
performing constant-current control and constant-voltage control on a charging signal during a charging process.

In another aspect, the embodiments of the present Specification further provides a charging device, comprising a memory, a processor, and a computer program stored on the memory, the computer program executes instructions of the method when being run by the processor.

In another aspect, the embodiments of the present Specification further provides a computer storage medium, storing a computer program thereon, the computer program executes instructions of the method when being run by the processor of the charging device.

In another aspect, the embodiments of the present Specification further provides a computer program product, the computer program product comprises a computer program which executes instructions of the method when being run by the processor.

As can be seen from the technical solutions provided by the above embodiments of the present Specification, in the embodiments of the present Specification, a charging device may obtain a residual voltage of an output terminal after a charging circuit is disconnected, and controls a discharge load connected in parallel with the output terminal to form a discharging circuit, thereby the residual voltage can be released via the discharging circuit. During this process, the charging device may also accelerate a discharge speed of the discharging circuit by means of performing frequency adjustment and/or width adjustment and/or dead zone adjustment on the residual voltage, so as to be able to release the residual voltage of the output terminal quickly and safely.

### DESCRIPTION OF DRAWINGS

In order to describe a technical solution in the embodiments of the present Specification or in a prior art more clearly, the drawings required for use in the embodiments or the prior art are briefly introduced below. Obviously, the drawings in the following description are only some embodiments of the present Specification. Persons skilled in the art can also obtain other drawings based on the these drawings under the premise that they do not pay inventive labor. In the drawings:
FIG. 1 shows a schematic diagram of a charging device in some embodiments of the present Specification;
FIG. 2 shows a circuit block diagram of a charging device in some embodiments of the present Specification;
FIG. 3 shows a flow diagram of a charge and discharge control method in some embodiments of the present Specification;
FIG. 4 shows a flow diagram of performing constant-voltage control on a charging signal during a charging process in some embodiments of the present Specification;
FIG. 5 shows a flow diagram of performing constant-current control on a charging signal during a charging process in some embodiments of the present Specification;
FIG. 6 shows a flow diagram of a charge and discharge control method in some other embodiments of the present Specification;
FIG. 7 shows a structure block diagram of a charging device in some embodiments of the present Specification.

### [Description of reference signs]

100. charging device;
11. output terminal;
12. main circuit of the charging device;
13. discharge load;
14. controllable switch;
702. charging device;
704. processor;
706. memory;
708. drive mechanism;
710. input/output interface;
712. input device;
714. output device;
716. presentation device;
718. graphic user interface;
720. network interface;
722. communication link;
724. communication bus.

### DETAILED DESCRIPTION

In order to make persons skilled in the art better understand the technical solutions in the present Specification, the technical solutions in the embodiments of the present Specification will be described clearly and completed with reference to the figures in the embodiments of the present Specification, obviously the described embodiments are only some embodiments of the present Specification, not all embodiments. Based on the embodiments in the present Specification, all other embodiments obtained by persons skilled in the art without paying inventive labor should fall into the scope protected by the present Specification. For example, in some descriptions, a second component is formed above a first component, which may include an embodiment in which the first component and the second component are formed in a manner of direct contact, and may further include an embodiment in which the first component and the second component are formed in a manner of indirect contact (i.e., an additional component may also be included between the first component and the second component).

And, for ease of description, some embodiments in the present Specification can use spatial relative terms such as "above...", "below...", "top" and "under", etc., to describe a relation between an element or component shown in each figure in the embodiments and another (or some other) element(s) or component(s). It should be understood that in addition to orientations described in the figures, a spatial relative term is also intended to include different orientations of an apparatus in use or operation. For example, if an apparatus in a figure is flipped, an element or component described as being located "under" or "below" other element or component will subsequently be positioned "above" or "over" the other element or component.

Charging devices of electric vehicles in the embodiments of the present Specification are commonly known as charging piles, etc. In order to solve the problem in prior arts that it is difficult to release a residual voltage on a charging device side quickly and safely after a charging circuit is disconnected, the embodiments of the present Specification provide an improved charging device.

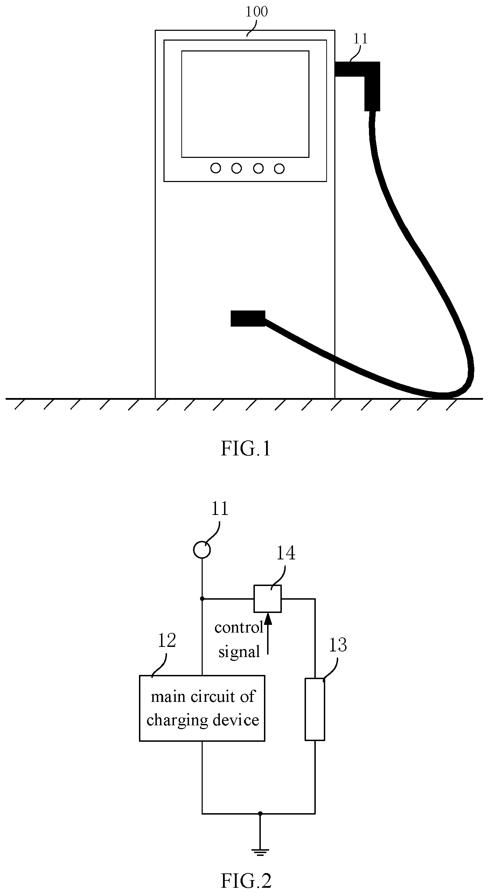

Referring to FIG. 1, in some embodiments of the present Specification, a charging device 100 may be provided with one or more output terminals 11. The output terminal 11 can be used to connect with a charging interface of an electric vehicle to realize the charging of the electric vehicle. With reference to FIG. 2, a main circuit 12 of the charging device can be connected in parallel with a discharge load 13 (such as a pure resistive circuit e.g. discharge resistance), to release a residual voltage; the discharge load 13 can be connected in series with a controllable switch 14 which is controlled by a processor (or a controller) of the charging device, i.e., the processor of the charging device can transmit a control signal to the controllable switch 14 to control the opening and closing of the controllable switch 14. Specifically, when the control signal is a closed signal, the controllable switch 14 is closed, the discharge load 13 forms a discharging circuit, and the residual voltage can be released through the discharging circuit; and when the control signal is a disconnected signal, the controllable switch 14 is disconnected, the discharge load 13 is open, and the residual voltage cannot be released through the discharge load 13.

In view of the negative correlation between a discharge speed and the discharge safety of the discharging circuit, the discharge speed of the discharging circuit should not be too large, so as to avoid causing a danger due to overheating of the discharge load 13. Thus, in the embodiments of the present Specification, the processor of the charging device may obtain a residual voltage of an output terminal after a charging circuit is disconnected, control a discharge load to form a discharging circuit, and perform frequency adjustment and/or width adjustment and/or dead zone adjustment on the residual voltage, so as to accelerate a discharge speed of the discharging circuit, thereby reaching the purpose of releasing the residual voltage quickly and safely. Specific implementation of performing frequency adjustment and/or width adjustment and/or dead zone adjustment on the residual voltage will be described below.

Preferably, in some other embodiments of the present Specification, in order to facilitate rapid release of the residual voltage, a resistance value of the discharge load 13 may be less than an equivalent resistance value of the main circuit 12 of the charging device.

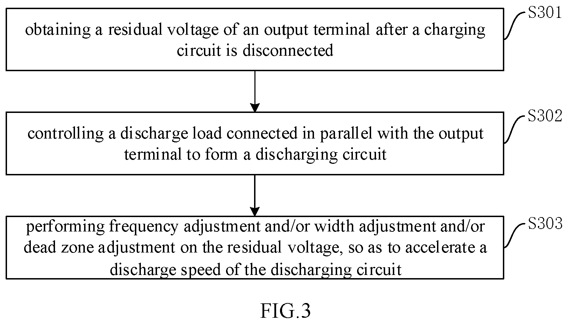

Referring to FIG. 3, in some embodiments of the present Specification, the charge and discharge control method of the charging device may comprise the following steps:
S301, obtaining a residual voltage of an output terminal after a charging circuit is disconnected.
S302, controlling a discharge load connected in parallel with the output terminal to form a discharging circuit.
S303, performing frequency adjustment and/or width adjustment and/or dead zone adjustment on the residual voltage, so as to accelerate a discharge speed of the discharging circuit.

In the embodiments of the present Specification, a charging device may obtain a residual voltage of an output terminal after a charging circuit is disconnected, and controls a discharge load connected in parallel with the output terminal to form a discharging circuit, thereby the residual voltage can be released via the discharging circuit. During this process, the charging device may also accelerate a discharge speed of the discharging circuit by means of performing frequency adjustment and/or width adjustment and/or dead zone adjustment on the residual voltage, so as to be able to release the residual voltage of the output terminal quickly and safely.

In some embodiments of the present Specification, obtaining a residual voltage of an output terminal may comprise the following steps:
1) Obtaining voltage sampling values of the output terminal for multiple consecutive cycles, to form a voltage sampling value sequence.
   The cycle refers to a cycle of a voltage signal of the output terminal. The voltage signal of the charging device is generally a periodic signal; such as a pulse width modulation (PWM) signal, etc. The charging device may be provided with a voltage sampling module and a current sampling module. Therefore, the voltage sampling module can be used to obtain voltage sampling values of the output terminal for multiple consecutive cycles.
2) Calculating an average value of middle portions of the voltage sampling value sequence, and taking the average value as a residual voltage of the output terminal.

There may be problems such as electromagnetic noise during voltage sampling, hence an average value of middle portions of the voltage sampling value sequence may be taken as a residual voltage of the output terminal, so as to obtain more an accurate residual voltage value. In this way, sampling and filtering of the residual voltage are realized via such mode.

For example, in an exemplary embodiment, voltage values of an output terminal for ten cycles can be collected continuously, and are arranged in order of size to form a voltage sampling value sequence; four to six voltage sampling values of the middle portions are taken out from the voltage sampling value sequence, and their average value is calculated to serve as a current residual voltage value of the output terminal.

In some embodiments of the present Specification, performing frequency adjustment and/or width adjustment and/or dead zone adjustment on the residual voltage may comprise the following steps:
1) Adjusting a pulse frequency of the residual voltage upward.

The purpose of adjusting upward (i.e., adjusting augmentatively) a pulse frequency of the residual voltage is to increase a discharge current, so as to be helpful to accelerate a discharge speed. Relative to width adjustment (i.e., pulse width adjustment) and dead zone adjustment, frequency adjustment can make a discharge signal waveform more stable, that is, frequency adjustment is safer and more effective than width adjustment and dead zone adjustment, thus when a residual voltage is adjusted, a frequency of the residual voltage may be taken as a prioritized adjustment obj ect.

In some embodiments of the present Specification, adjusting a pulse frequency of the residual voltage upward may comprise: adjusting a pulse frequency of the residual voltage upward by using a proportional adjustment mode within a specified frequency adjustment range (the specified frequency adjustment range may be determined according to a specific situation of a charging device). For example, in an exemplary embodiment, for a certain charging device, its frequency adjustment range is 85KHz to 165KHz; within the range of 85KHz to 165KHz, a pulse frequency of a residual voltage may be adjusted upward.

In some embodiments of the present Specification, in the process of frequency adjustment described above, a current value of a discharging circuit can be detected in real time, and whether it exceeds a current threshold can be determined in real time. The discharging circuit can be disconnected temporarily when a current value of the discharging circuit exceeds a current threshold, to prevent damage to a discharge load, so as to be conducive to improving safety of residual voltage release.

2) If the residual voltage still does not drop to a specified voltage value when the pulse frequency is adjusted to an upper frequency limit, adjusting a pulse width of the residual voltage downward.

If the residual voltage still does not drop to a specified voltage value (the specified voltage value may be set according to an actual need, such as 36V, etc.) when the pulse frequency is adjusted to an upper frequency limit, a pulse width of the residual voltage may be adjusted downward (i.e., adjusted diminishingly), the purpose is: to further accelerate a discharge speed via a width adjustment mode. Relative to the frequency adjustment, although waveform stability of the width adjustment is slightly worse, it is better than the dead zone adjustment; thus, when it is difficult to reduce the residual voltage to the specified voltage value through the frequency adjustment, settle for second best, i.e., continue to regulate using the width adjustment mode, to further accelerate a discharge speed.

Of course, before the pulse frequency is adjusted to the upper frequency limit, or when the pulse frequency is adjusted to the upper frequency limit, the residual voltage can be reduced to the specified voltage value, thereby fast and safe discharge can be realized without further adjustment.

In the embodiments of the present Specification, in the process of the width adjustment described above, a current value of a discharging circuit can also be detected in real time. The discharging circuit can be disconnected temporarily when a current value of the discharging circuit exceeds a current threshold, to prevent damage to a discharge load, so as to be also conducive to further improving safety of residual voltage release.

In some embodiments of the present Specification, adjusting a pulse width of the residual voltage downward may comprise: adjusting a pulse width of the residual voltage downward using a proportional adjustment mode within a first width adjustment range (the first width adjustment range may be determined according to a specific situation of a charging device) according to a current pulse width and a voltage error value of the residual voltage. The voltage error value is a difference between a current voltage value of the residual voltage and the specified voltage value.

For example, in an exemplary embodiment, a first width adjustment range of a certain charging device is 30 *µs* to 500 *µs*, and within the range of 30 *µs* to 500 *µs* , a pulse width of the residual voltage may be adjusted downward using a proportional adjustment mode.

3) If the residual voltage still does not drop to the specified voltage value when the pulse width is adjusted to a lower width limit, adjusting a dead zone time of the residual voltage downward.

In the embodiments of the present Specification, dead zone adjustment refers to adjustment of a dead zone time. The dead zone time refers to dead zone time of a switching power supply in a charging device. The switching power supply is different from a linear power supply, a transistor state switching of the switching power supply is usually switched between a fully open mode (a saturation zone) and a fully closed mode (a cut-off zone), and in order to avoid a current surge caused by simultaneous conduction of two or more transistors which are connected in a push-pull type, a protection period needs to be set. For example, by taking a PMW pulse signal generator as an example, the dead zone time refers to: a protection period in order to prevent simultaneous conduction of upper and lower bridge arm Insulated Gate Bipolar Transistors (IGBT) due to a switching speed problem when the PMW is outputted, usually also refers to a PWM response time.

If the residual voltage still does not drop to the specified voltage value when the pulse width is adjusted to a lower width limit, a dead zone time of the residual voltage may be adjusted downward, to further accelerate a discharge speed via a width adjustment mode. Compared with the frequency adjustment and the width adjustment, waveform stability of the dead zone adjustment is worst; however, when the frequency adjustment and the width adjustment are difficult to work (that is, it is difficult to reduce a residual voltage to a specified voltage value), in order to further accelerate a discharge speed, the dead zone adjustment mode may also be used to continue to regulate.

Of course, before the pulse width is adjusted to a lower width limit of a first width adjustment range, or when the pulse width is adjusted to the lower width limit of the first width adjustment range, the residual voltage can be reduced to the specified voltage value, thereby fast and safe discharge can also be realized without further adjustment.

In some embodiments of the present Specification, adjusting a dead zone time of the residual voltage downward may comprise: adjusting a pulse width of the residual voltage downward using a proportional adjustment mode within a second width adjustment range (the second width adjustment range may also be determined according to a specific situation of a charging device) according to a current pulse width and a voltage error value of the residual voltage, to regulate the dead zone time of the residual voltage.

For example, in an exemplary embodiment, a second width adjustment range of a certain charging device is 400 *ns* to 3 *µs,* and within the range of 400 *ns* to *3 µs,* a dead zone time of a residual voltage may be adjusted by means of adjusting a pulse width of the residual voltage downward.

In the embodiments of the present Specification, in the process of the dead zone adjustment described above, a current value of a discharging circuit can further be detected in real time. The discharging circuit can be disconnected temporarily when a current value of the discharging circuit exceeds a current threshold, to prevent damage to a discharge load, so as to be further conducive to further improving safety of residual voltage release.

In some embodiments of the present Specification, controlling a discharge load connected in parallel with the output terminal to form a discharging circuit may comprise: determining whether a residual voltage of the output terminal reaches a voltage threshold; controlling a discharge load connected in parallel with the output terminal to form a discharging circuit when the residual voltage of the output terminal reaches the voltage threshold. In this way, only a residual voltage with a higher voltage value needs to be released quickly and safely to protect the safety of a human body and of a charging device. For a residual voltage with a lower voltage value, because it is not easy to cause harm to a human body and a charging device, a capacitive element in a main circuit of the charging device may be used to release naturally, which is conducive to reducing the cost of residual voltage discharge control.

In some other embodiments of the present Specification, the charge and discharge control method of the charging device may further comprise: performing constant-current control and/or constant-voltage control on a charging signal during a charging process. The constant-current control refers to a charging control mode in which a current is maintained at a constant value; performing the constant-current control can help to improve a charging speed of an electric vehicle. The constant-voltage control refers to a charging control mode in which a voltage is maintained at a constant value; performing the constant-voltage control can help to charge a voltage at both ends of a rechargeable battery of an electric vehicle to a rated voltage; in other words, performing the constant-voltage control can cause the rechargeable battery of the electric vehicle to be fully charged (i.e. charged to a fully-charged state). Preferably, during a charging process, the constant-current control mode may be used first to cause a voltage of a rechargeable battery of an electric vehicle to be close to a rated voltage, then the constant-voltage control is used to continue to charge, till the rechargeable battery of the electric vehicle is fully charged. In this way, it can help the rechargeable battery of the electric vehicle be fully charged quickly.

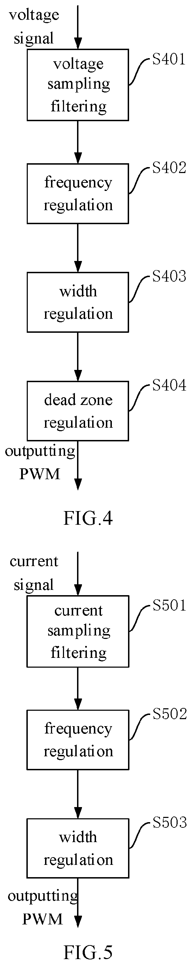

Referring to FIG. 4, in some embodiments of the present Specification, performing constant-voltage control on a charging signal during a charging process may comprise the following steps:
Step S401, voltage sampling filtering.

Voltage sampling filtering here refers to sampling filtering of a charging voltage, for its implementation process, please see the sampling treatment process of the residual voltage in the preceding text, details are omitted here.

Step S402, frequency adjustment.

The purpose of frequency adjustment and/or width adjustment and/or dead zone adjustment in constant-voltage control is to achieve a constant voltage control effect, i.e., to realize a rechargeable battery of an electric vehicle to be fully charged.

The frequency adjustment in the embodiments of the present Specification refers to frequency adjustment of a charging voltage. For the frequency adjustment of a charging voltage, please refer to the treatment process of performing the frequency adjustment of the residual voltage in the preceding text, details are omitted here. The difference lies in using a proportional integral adjustment mode when performing frequency adjustment of a charging voltage.

Step S403, width adjustment.

The width adjustment in the embodiments of the present Specification refers to pulse width adjustment of a charging voltage. For the width adjustment of a charging voltage, please refer to the treatment process of performing the width adjustment of the residual voltage in the preceding text, details are omitted here.

Step S404, dead zone adjustment.

The dead zone adjustment in the embodiments of the present Specification refers to adjustment of dead zone time of a switching power supply in a charging device. For the dead zone adjustment, please refer to the treatment process about the dead zone adjustment, details are omitted here.

In the embodiments of the present Specification, during the frequency adjustment and/or width adjustment and dead zone adjustment of the above constant-voltage control, a current value of a charging current can further be detected in real time, and whether the current value exceeds a current threshold can be determined in real time. Charging output can be paused when the current value of the charging current exceeds the current threshold, to prevent damage to a discharge load, so as to be further conducive to further improving charging safety.

In the constant-voltage control in the embodiment shown in FIG. 4, adjustment is made according to a priority order i.e., frequency adjustment→width adjustment→ dead zone adjustment, which can help maintain stability of a waveform during a charging process, so as to improve the charging safety.

Referring to FIG. 5, in some embodiments of the present Specification, performing constant-current control on a charging signal during a charging process may comprise the following steps:
Step S501, current sampling filtering.

Current sampling filtering here refers to sampling filtering of a charging current, for its implementation process, please see the sampling treatment process of the residual voltage in the preceding text, details are omitted here. The difference lies in that a collection object in this step is a charging current not a residual voltage.

Step S502, frequency adjustment.

The purpose of frequency adjustment and width adjustment in constant-current control is to achieve a constant current control effect, i.e., to realize fast charging of an electric vehicle.

The frequency adjustment in the embodiments of the present Specification refers to frequency adjustment of a charging current. For the frequency adjustment of a charging current, please refer to the treatment process of performing the frequency adjustment of the residual voltage in the preceding text, details are omitted here. The difference lies in using a proportional integral adjustment mode when performing frequency adjustment of a charging current.

Step S503, width adjustment.

The width adjustment in the embodiments of the present Specification refers to pulse width adjustment of a charging current. For the width adjustment of a charging current, please refer to the treatment process of performing the width adjustment of the residual voltage in the preceding text, details are omitted here.

In the embodiments of the present Specification, in the frequency adjustment and width adjustment processes of the above constant current control, charging output can be paused when the current value of the charging current exceeds the current threshold, to prevent damage to a discharge load, so as to be conducive to further improving charging safety.

In the constant-current control in the embodiment shown in FIG. 5, adjustment is made according to a priority order i.e., frequency adjustment→width adjustment, which also helps maintain stability of a waveform during a charging process, so as to improve the charging safety.

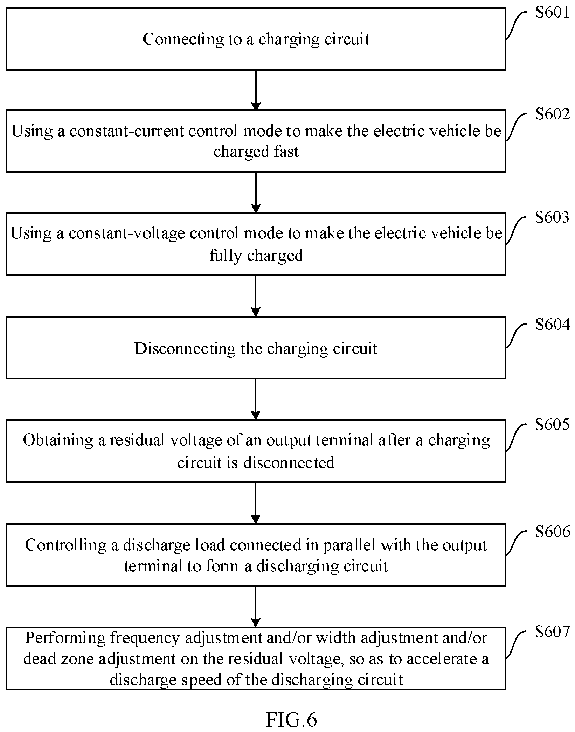

Some other embodiments of the present Specification further provide another charge and discharge control method, which may be applied to a charging device side. Referring to FIG. 6, the charge and discharge control method may comprise the following steps:
S601, Connecting to a charging circuit.

With reference to FIG. 1, when an electric vehicle needs to be charged, an output terminal of a charging device can be taken down and inserted into a charging interface of the electric vehicle to perform charging docking. When the charging docking is completed, the charging device is realized to be connected to the charging circuit, at this moment, the charging device starts to charge a rechargeable battery of the electric vehicle.

S602, Using a constant-current control mode to make the electric vehicle be charged fast.

Generally, only when the remaining electric quantity of the rechargeable battery of the electric vehicle is at a low level, the electric vehicle needs to be charged; thus, a whole charging process generally needs to take a relatively long time. In order to improve a charging speed and shorten a charging time, the constant-current control mode may be adopted first to charge.

S603, Using a constant-voltage control mode to make the electric vehicle be fully charged.

When a voltage at both ends of the rechargeable battery of the electric vehicle is charged to a certain set value, in order to make the electric vehicle be fully charged, a charging control mode can be switched from the constant-current control to the constant-voltage control.

S604, Disconnecting the charging circuit.

In most cases, disconnecting the charging circuit may refer to: when the rechargeable battery of the electric vehicle is fully charged, in order to prevent overcharging to help extend a service life of the rechargeable battery, the charging device can automatically disconnect the charging circuit after the rechargeable battery of the electric vehicle is fully charged. At this moment, the output terminal of the charging device may still be in a state of docking with the charging interface of the electric vehicle, but the charging device has stopped charging. Of course, in some special cases, because a user is in a hurry to use a car (or for other reasons), the charging is artificially terminated when the charging is not completed (that is, when the charging is not completed, the output terminal of the charging device is forced to pull out from the charging interface of the electric vehicle), which may also lead to disconnection of the charging circuit.

S605, Obtaining a residual voltage of an output terminal after a charging circuit is disconnected.

S606, Controlling a discharge load connected in parallel with the output terminal to form a discharging circuit.

S607, Performing frequency adjustment and/or width adjustment and/or dead zone adjustment on the residual voltage, so as to accelerate a discharge speed of the discharging circuit.

For the steps S605-S607, please refer to the descriptions in the relevant sections of the preceding text, details are omitted here.

Therefore, based on the charge and discharge control method shown in FIG. 6, not only the rechargeable battery of the electric vehicle can be fully charged quickly, thus shortening the charging time of the electric vehicle and improving the charging efficiency of the electric vehicle; but also the residual voltage of the output terminal can be released quickly and safely after the charging circuit is disconnected, thus improving safety of a human body and the charging device.

Although the process flow described above includes a plurality of operations that occur in a specific order, it should be clearly understood that these processes may include more or fewer operations that can be performed sequentially or in parallel (for example, using a parallel processor or a multithreaded environment).

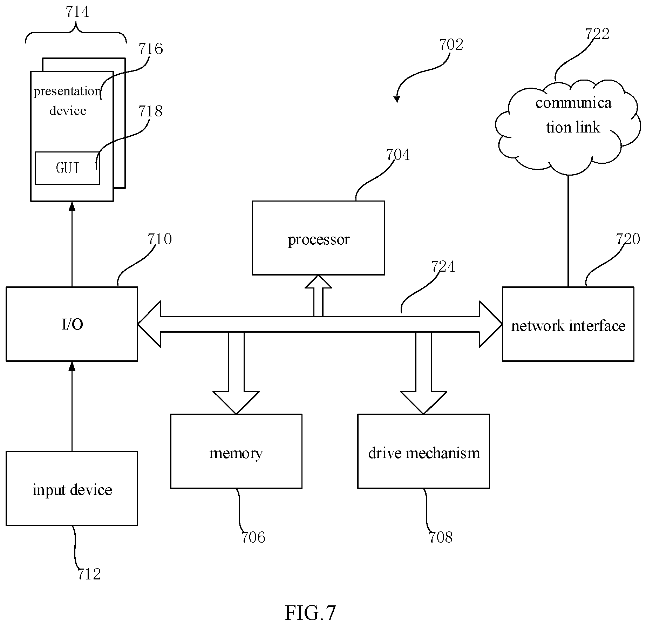

As shown in FIG. 7, in some embodiments of the present Specification, the charging device 702 may include one or more processors 704, such as one or more central processing units (CPUs) or graphics processing units (GPUs), each of processing units may implement one or more hardware threads. The charging device 702 may also include any memory 706 for storing any kind of information, such as codes, settings, data, etc., and in a specific embodiment, a computer program that is on the memory 706 and can be run on the processor 704 can perform instructions of the charge and discharge control method according to any one of the above embodiments when the computer program is run by the processor 704. Non-restrictively, for example, the memory 706 may include any one of or a combination of the following: any type of RAM, any type of ROM, a flash memory device, a hard disk and an optical disc, etc. More generally, any memory can use any technology to store information. Further, any memory can provide volatile or non-volatile retention of information. Further, any memory can represent a fixed or removable component of the charging device 702. In one case, when the processor 704 executes an associated instruction stored in any memory or a combination of memories, the charging device 702 may perform any operation of the associated instruction. The charging device 702 also includes one or more drive mechanisms 708 for interacting with any memory, such as hard disk drive mechanisms, and optical disc drive mechanisms, etc.

The charging device 702 may also include an input/output interface 710 (I/O) for receiving various inputs (via the input device 712) and for providing various outputs (via the output device 714). A specific output mechanism may include a presentation device 716 and an associated graphical user interface (GUI) 718. In other embodiments, the input/output interface 710 (I/O), the input device 712, and the output device 714 may also be excluded and only serve as a single charging device in a network. The charging device 702 may further include one or more network interfaces 720 for exchanging data with other devices via one or more communication links 722. One or more communication buses 724 couple the components described above.

The communication link 722 can be implemented in any way, for example, through a local area network, a wide area network (e.g., Internet), a point-to-point connection, etc., or any combination thereof. The communication link 722 may include any combination of a hardwired link, a wireless link, a router, a gateway function, a name server, etc. governed by any protocol or a combination of protocols.

For the sake of description, it is divided into various units based on functions to respectively describe the charging device. Of course, the functions of each unit may be implemented in the same one or more software and/or hardware when implementing the present Specification.

The present disclosure is described by reference to methods, devices (systems) in some embodiments of the present Specification, and flow charts and/or block diagrams of computer program products. It should be understood that each process and/or block in a flowchart and/or block diagram as well as a combination of processes and/or blocks in a flowchart and/or block diagram can be implemented by computer program instructions. These computer program instructions may be provided to a processor of a general-purpose computer, a special purpose computer, an embedded processor or other programmable data processor to produce a machine, so that instructions executed by a processor of a computer or other programmable data processor produce a device for implementing a function specified in one or more flows in a flow chart and/or one or more blocks in a block diagram.

These computer program instructions may also be stored in a computer-readable memory capable of directing a computer or other programmable data processor to work in a particular manner, so that the instructions stored in such computer-readable memory produce a manufactured item including an instruction device, the instruction device implements a function specified in one or more flows in a flow chart and/or one or more blocks in a block diagram.

These computer program instructions may also be loaded onto a computer or other programmable data processor, so that a series of operational steps are performed on the computer or other programmable device to produce computerimplemented processing, thus the instructions executed on the computer or other programmable device provide steps of implementing a function specified in one or more flows in a flow chart and/or one or more blocks in a block diagram.

In a typical configuration, a charging device includes one or more processors (CPUs), input/output interfaces, a network interface, and an internal storage.

The internal storage may include forms such as a non-permanent memory in a computer readable medium, a random access memory (RAM) and/or a non-volatile memory, e.g., a read-only memory (ROM) or a flash memory (flash RAM). The internal storage is an example of a computer readable medium.

For the computer readable medium including permanent and non-permanent, removable and non-removable media, information storage can be realized by any method or technique. The information may be computer-readable instructions, data structures, modules of programs, or other data. Examples of a computer storage medium include, but are not limited to a phase change memory (PRAM), a static random access memory (SRAM), dynamic random access memory (DRAM), other types of random access memory (RAM), a read-only memory (ROM), an electrically erasable programmable read-only memory (EEPROM), a flash memory or other memory technologies, a CD-ROM read-only memory (ROM), a digital multifunctional disc (DVD) or other optical storage, a magnetic cassette tape, a disk storage or other magnetic storage device or any other non-transmission medium, which may be used to store information that can be accessed by a charging device. As defined herein, a computer readable medium does not include transitory media, such as a modulated data signal and a carrier.

Persons skilled in the art should understand that the embodiments of the present Specification may be provided as methods, systems or computer program products. Therefore, the embodiments of the present Specification may take the form of full hardware embodiments, full software embodiments, or embodiments combining software and hardware aspects. And, the embodiments of the present Specification may take the form of a computer program product implemented on one or more computer available storage mediums (including but not limited to disk memory, CD-ROM, optical memory, etc.) in which computer available program codes are contained.

The embodiments of the present Specification may be described in the general context of computer-executable instructions executed by a computer, such as program modules. Generally, the program modules include routines, programs, objects, components, and data structures, etc. which perform specific tasks or implement specific abstract data types. The embodiments of the present Specification may also be practiced in distributed computing environments where tasks are performed by remote processors connected through a communication network. In a distributed computing environment, program modules may be located in a local and remote computer storage medium including a storage device.

It should also be understood that in the embodiments of the present invention, the term "and/or" is merely an association relation describing an associated object, representing that three kinds of relations can exist. For example, A and/or B can be represented as: three situations, i.e., A exists alone, A and B exist simultaneously, and B exists alone.

Each embodiment in the present Specification is described in a progressive manner, and the same and similar parts between embodiments can be referred to each other. Each embodiment focuses on differences from other embodiments. In particular, for a system embodiment, because it is substantially similar to a method embodiment, its description is relatively simple, and for the relevance, the partial description of the method embodiment may be referred to. In the description of the present Specification, reference terms "an embodiment", "some embodiments", "an example", "a specific example" or "some examples", etc. are used to mean that a specific feature, structure, material or characteristic described in conjunction with the embodiment or example is contained in at least one embodiment or example of the embodiments of the present Specification. In the present Specification, schematic representations of the above terms are not necessary to aim at the same embodiments or examples. And, the described specific feature, structure, material or characteristic may be combined in a suitable manner in any one or more embodiments or examples. In addition, without contradicting each other, persons skilled in the art may incorporate and combine different embodiments or examples described in the present Specification as well as the features of different embodiments or examples.

The above are only the embodiments of the present disclosure, and are not used to limit the present disclosure. For persons skilled in the art, the present disclosure may have various changes and variations. Any amendment, equivalent replacement or improvement, etc. made within the spirit and principle of the present disclosure shall be included in the scope of the claims of the present disclosure.

## Claims

1. A charge and discharge control method, comprising:
obtaining a residual voltage at an output terminal after a charging circuit is disconnected;
controlling a discharge load connected in parallel with the output terminal to form a discharge circuit;
performing frequency adjustment and/or width adjustment and/or dead zone adjustment on the residual voltage, so as to accelerate a discharge speed of the discharge circuit.

2. The charge and discharge control method according to claim 1, wherein obtaining a residual voltage at an output terminal, comprises:
obtaining voltage sampling values at the output terminal for multiple consecutive cycles, to form a voltage sampling value sequence;
calculating an average value of middle portions of the voltage sampling value sequence, and taking the average value as a residual voltage at the output terminal.

3. The charge and discharge control method according to claim 1, wherein performing frequency adjustment and/or width adjustment and/or dead zone adjustment on the residual voltage, comprises:
adjusting a pulse frequency of the residual voltage upward;
if the residual voltage still does not drop to a specified voltage value when the pulse frequency is adjusted to an upper frequency limit, adjusting a pulse width of the residual voltage downward;
if the residual voltage still does not drop to the specified voltage value when the pulse width is adjusted to a lower width limit, adjusting a dead zone time of the residual voltage downward.

4. The charge and discharge control method according to claim 3, wherein adjusting a pulse frequency of the residual voltage upward, comprises:
adjusting a pulse frequency of the residual voltage upward by using a proportional adjustment mode within a specified frequency adjustment range.

5. The charge and discharge control method according to claim 3, wherein adjusting a pulse width of the residual voltage downward, comprises:
adjusting a pulse width of the residual voltage downward using a proportional adjustment mode within a first width adjustment range according to a current pulse width and a voltage error value of the residual voltage; the voltage error value is a difference between a current voltage value of the residual voltage and the specified voltage value.

6. The charge and discharge control method according to claim 3, wherein adjusting a dead zone time of the residual voltage downward, comprises:
adjusting a pulse width of the residual voltage downward using a proportional adjustment mode within a second width adjustment range according to a current pulse width and a voltage error value of the residual voltage, to adjust a dead zone time of the residual voltage; the voltage error value is a difference between a current voltage value of the residual voltage and the specified voltage value.

7. The charge and discharge control method according to claim 3, wherein performing frequency adjustment and/or width adjustment and/or dead zone adjustment on the residual voltage further, comprises:
disconnecting the discharge circuit when a current value of the discharge circuit exceeds a current threshold.

8. The charge and discharge control method according to claim 1, wherein controlling a discharge load connected in parallel with the output terminal to form a discharge circuit, comprises:
determining whether a residual voltage of the output terminal reaches a voltage threshold;
controlling a discharge load connected in parallel with the output terminal to form a discharge circuit when the residual voltage of the output terminal reaches the voltage threshold.

9. The charge and discharge control method according to claim 1, wherein a resistance value of the discharge load is less than an equivalent resistance value of a main circuit of a charging device.

10. The charge and discharge control method according to claim 1, wherein further comprising:
performing constant-current control and constant-voltage control on a charging signal during a charging process.

11. A charging device, comprising a memory, a processor, and a computer program stored on the memory, **characterized in that** the computer program executes instructions of the method according to any one of claims 1-10 when being run by the processor.

12. A computer storage medium, storing a computer program thereon, **characterized in that** the computer program executes instructions of the method according to any one of claims 1-10 when being run by the processor of the charging device.

13. A computer program product, **characterized in that** the computer program product comprises a computer program which executes instructions of the method according to any one of claims 1-10 when being run by the processor.
